# EUROPEAN PATENT APPLICATION

(11) **EP 1 189 141 A2**
(43) Date of publication of application: **20.03.2002**
(21) Application number: 01000427.3
(22) Date of filing: 06.09.2001
(51) Int. Cl.: G06F 13/40

(54) **Bus bridge**

(30) Priority: 13.09.2000 US 232206 P
(71) Applicant: Texas Instruments Inc., Dallas, Texas 75251 (US)
(72) Inventor: Morrow, Neil G., McKinney, TX, 75070 (US)
(74) Representative: Holt, Michael

(57) **Abstract**

Bus repeaters offer electrical isolation by separating a single bus interface into one or more segments, and may provide cost advantages over bus bridges. There is a class of electrical equipment that can utilize the advantages offered by bus repeaters, and in addition to these advantages need to separate the bus segments by a distance greater than can be offered by the typical single chip repeater. What is disclosed here is a method for creating bus interface segments 102, 104 by use of a repeater 106, 108 that consists of two or more devices separated by a physical link 110.

## Description

This invention generally relates to bus interfaces such as those used for computer systems. More particularly, it relates to a bus split into at least two segments separated by a physical link.

### BACKGROUND OF THE INVENTION

Computers typically use a bus to transfer data between the processor and various devices connected to the bus. Sometimes multiple buses are used and connected to one another with one or more devices on each bus. These buses may be arranged in a hierarchy with the host processor connected to a high level bus reserved for exchanging data most urgently needed by the processor, and lower level buses may connect to devices having a lower priority, with the buses connected with a bridge. In other cases, portions of a single bus may be connected with a bus repeater.

Bus bridges are typically used to provide electrical isolation by distributing bus device loads among one or more hierarchically enumerated buses. The addressing to communicate across several hierarchically enumerated buses is typically built into the bus protocol to accommodate bridges. Bus bridges are configured by a bus manager, typically a software component, to understand the hierarchical bus topology and address range requirements of the devices that exist on subordinate buses. Bus bridges then positively decode and accept transactions in these ranges on the primary bus interface, and negatively decode the same address range for transactions on the secondary interface. The bus bridge is typically an element defined by a bus interface standard that supports a hierarchical topology.

Bus repeaters are devices that are also used to provide electrical isolation by distributing bus device loads among several bus segments, but require little or no configuration by a software component. Bus repeaters either accept and forward transactions that are not claimed by other bus segment devices, or are made aware by non-standard mechanisms of what address ranges to claim. A bus repeater may accept and forward all transactions on one bus segment interface to the other segment.

Bus repeaters do not create new buses in a bus hierarchy, are not typically defined by a bus interface standard, and may be used for bus interfaces that do not support a hierarchical topology.

Most buses are of a limited length defined by the bus specification due to timing delays. Often it is desirable to have buses communicate over a longer distance such as to an expansion chassis or docking station.

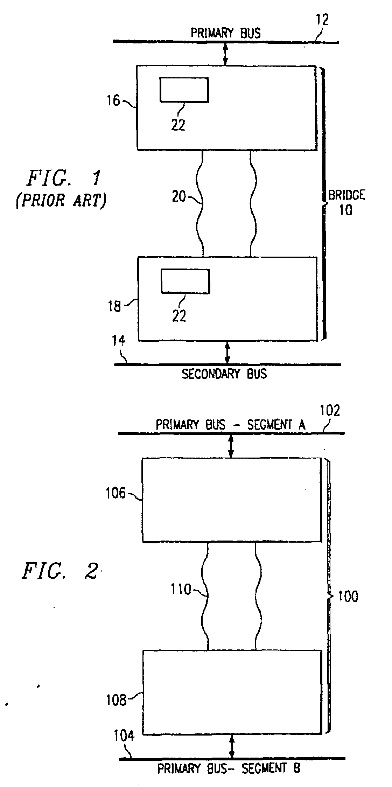

With reference to Figure 1, there is shown a prior art bridge architecture 10 between a primary bus 12 and a secondary bus 14. Bridge 10 includes two half-bridges 16, 18 connected with one or more physical links 20. The physical links are typically another bus such as a serial bus to enable placement of the secondary bus remotely from the primary bus. One or both of the primary and secondary bridges have status registers 22 to communicate with the buses according to the bus protocols. An example of the prior art illustrated in Figure 1 is found in US patent 6,070,214 to Frank Ahern.

### SUMMARY OF THE INVENTION

The present invention provides a segment of a primary bus to be remotely located from another segment of the bus over a physical link such as a high-speed serial bus, or any connection of electrical signals. The present invention uses a repeater topology rather than a hierarchical bridge topology. While bus bridges and bus repeaters offer similar advantages to electrical systems; their subtle functional differences greatly impact bus topology and bandwidth distribution throughout the bus topology. Bus bridges and bus repeaters have different configuration requirements. For example, bus repeaters typically have very little or no configuration required and are transparent to the system components and software.

An advantage of the present invention is the ability to remotely place devices on a segment of the primary bus.

An additional advantage of the present invention is reduced protocol to the bus repeater compared to the bus bridge topology of the prior art.

Another advantage of the present invention is reduced decode circuitry compared to the bus bridge topology of the prior art.

An additional advantage of the present invention is reduced decode time since all transactions may be forwarded from one segment to another without consideration of bus hierarchy as compared with the bus bridge topology of the prior art. This may result in improved bus bandwidth and improved system performance.

### BRIEF DESCRIPTION OF THE DRAWINGS

The novel features believed characteristic of the invention are set forth in the appended claims. The invention itself, however, as well as other features and advantages thereof, will be best understood by reference to the detailed description which follows, read in conjunction with the accompanying drawings, wherein:
Fig. 1 A prior art hierarchical bus split bridge design;
Fig. 2 A bus repeater separating two segments of a bus with a high speed link according to an embodiment of the present invention; and
Fig. 3 Another embodiment having a bus repeater separating two segments of a bus with a high speed link.

### DETAILED DESCRIPTION OF THE PREFERRED EMBODIMENTS

The preferred embodiment of the present invention is best understood by referring to FIGS. 1-4 of the drawings, like numerals are used for like and corresponding parts of the various drawings.

The present invention uses a bus repeater to connect two segments of a single bus with a physical link such as a serial bus. While the overall structure may appear somewhat similar to a bridge, the topology and functional operation within the system are different. A bus repeater may also used be used to provide electrical isolation by distributing bus device loads among several bus segments or to extend a bus to another location. But compared to a bridge, it requires little or no configuration by a software component. Bus repeaters either accept and forward transactions that are not claimed by other bus segment devices, or are made aware by non-standard mechanisms of what address ranges to claim. A bus repeater may accept and forward all transactions on one bus segment interface to the other segment. Bus repeaters do not create new buses in a bus hierarchy, are not typically defined by a bus interface standard, and may be used for bus interfaces that do not support a hierarchical topology.

With reference to Figure 2, there is shown an embodiment of the present invention. A repeater 100 separates two portions of a primary bus into segment A 102 and segment B 104. Repeater 100 is separated into two half repeater circuits 106, 108 connected with one or more physical links 110. Thus a portion of the repeater is located on either side of the physical link on a separate printed circuit board and likely in a separate enclosure. The physical links are typically pairs of high speed electrical signals, a set of electrical signals dedicated to provide the physical link, or another bus such as a serial bus to enable placement of the secondary bus remotely from the primary bus. In contrast, the prior art bus bridge creates a new bus as shown in Figure 1.

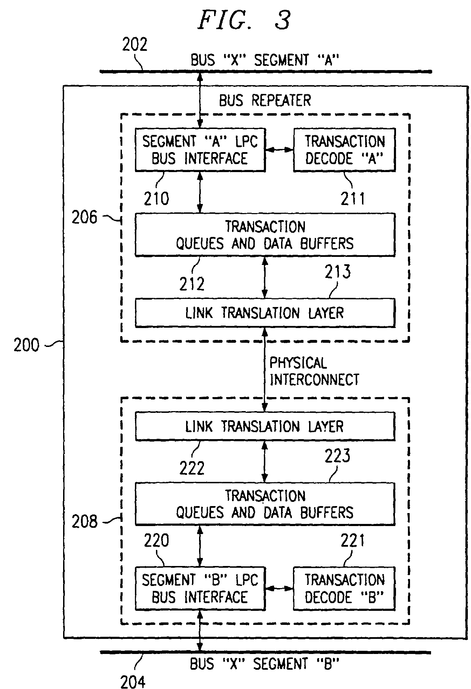

Figure 3 illustrates another embodiment of the present invention. The repeater 200 separates bus "X" into two bus segments 202, 204. The repeater 200 consists of two half-repeater devices (206 and 208) separated by a physical link. These devices each consist of a bus segment interface block (210 and 220), and in some embodiments, decode logic for that segment (211 and 221). The decode logic determines which cycles to accept and forward to the other bus interface segment. A bus repeater may accept cycles by subtractive decode, which means no other bus device on that segment accepted the cycle. The decode logic may learn through subtractive decode which address ranges should be forwarded to the other segment. The decode logic for the segment "A" bus repeater device (11) may be different from the decode logic for the segment "B" bus repeater device (21).

When a transaction is accepted by the bus repeater, it is placed in a transaction queue (212 and 222) which may also contain data that corresponds to the transaction. The transaction queues may support any number of pending transactions that are destined to cross the bus repeater. The transaction queues for the segment "A" bus repeater device (212) may be different than the transaction queues for the segment "B" bus repeater device (222). Each bus repeater may implement a link translation block (213 and 223) that maps the transaction to a protocol specific to transferring the information across the physical link. If the physical link is an additional dedicated instance of the bus interface, then the translation block may not be necessary.

In a preferred embodiment, the bus segments A and B are segments of a single non-hierarchical PCI bus. Alternatively the bus may be of the Low Pin Count (LPC) type as proposed by Intel for example in "Low Pin Count (LPC) Interface Specification, Revision 1.0, September 1997", presently available at http://developer.intel.com/design/chipsets/industry/LPC100.pdf The repeater 200 may use transaction decode as described above, or in another embodiment, the repeater simply repeats all transactions over the bus that are not claimed by any other device.

In a further embodiment, the physical interconnect link consists of pairs of high-speed electrical signals, such as that used for LVDS (Low Voltage Differential Signaling), or a set of electrical signals dedicated to provide the physical link.

In other embodiments, the physical link can be another bus, such as the LVDS, Gigabit Ethernet, InfiniBand, IEEE1394 serial bus, or a wireless link such as infrared or RF (radio frequency), or a combination of these.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

## Claims

1. A system for extending a signal path of a host bus comprising:
a first repeater portion connected to a first segment of the host bus;
a second repeater portion connected to a second segment of the host bus remote from the first portion of the host bus, where the first and second portions of the repeater are connected by a serial link.

2. The system according to claim 1, wherein the serial link is chosen from one of the following: LVDS, Gigabit Ethernet, InfiniBand, IEEE1394, RF Wireless, Infrared Wireless, LVDS(Flatlink), AC Link, LPC link or any combination of these.

3. The system according to claim 1 or claim 2, wherein the host bus is a PCI bus.

4. The system according to claim 1 or claim 2, wherein the host bus is an LPC (Low Pin Count) bus.

5. The system according to any preceding claim, wherein at least one of the repeater portions further comprise:
an interface to the host bus segment;
a transaction queue with a data buffer connected to the interface;
a link translation layer connected the transaction queue to translate incoming transactions from the host bus into serial streams to be sent over a serial link.

6. The system according to claim 5, further comprising a transaction decode circuit connected to the interface to the host bus segment to determine which transactions on the host bus to accept and pass on over the serial link.

7. A bus repeater circuit comprising:
an interface to a PCI host bus segment;
a transaction queue with a data buffer connected to the interface;
a link translation layer connected the transaction queue to translate incoming transactions from the host bus into serial streams to be sent over an external serial link.

8. The repeater according to claim 7, further comprising a transaction decode circuit connected to the interface to the host bus segment to determine which transactions on the host bus to accept and pass on over the serial link.

9. A bus repeater as claimed in claim 7 or claim 8 and forming a repeater of the system of any of claims 1 to 6.
